# EUROPÄISCHE PATENTSCHRIFT

(11) **EP 0 511 619 B1**
(45) Veröffentlichungstag und Bekanntmachung des Hinweises auf die Patenterteilung: **28.06.1995**
(21) Anmeldenummer: 92107171.8
(22) Anmeldetag: 27.04.1992
(51) Int. Cl.: A22C 11/00

(54) **Vorrichtung zum automatischen Legen und Formen von Wurstlängen, insbesondere Bratwurst**
Device for automatically placing and shaping lengths of sausage, especially german sausage
Dispositif pour déposer et former automatiquement des longueurs de saucisse en particulier de saucisses rôties

(30) Priorität: 29.04.1991 DE 9105242 U
(43) Veröffentlichungstag der Anmeldung: 04.11.1992
(73) Patentinhaber: FLEISCHWARENFABRIK WALTNER GmbH, D-50996 Köln (DE)
(72) Erfinder: Fett, Helmut, W-5000 Köln 50 (DE)
(74) Vertreter: Maxton, Alfred, Dipl.-Ing.

(56) Entgegenhaltungen:
- DE-A- 2 937 761
- DE-U- 8 814 178
- FR-A- 1 137 534
- GB-A- 2 161 445
- US-A- 2 285 736
- US-A- 3 674 163

## Beschreibung

Die Erfindung betrifft eine Vorrichtung, mit der Wurstlängen jeder Art, insbesondere Bratwürste, in Formen und Figuren gelegt, mit einem Spieß versehen und weiter verarbeitet werden können, wodurch gleichbleibende Formen und niedere Zeitabläufe erzielt werden. Die Vorrichtung ist als vollautomatische Einheit verwendbar, oder kann in einen Maschinenverbund eingegliedert werden, da die Grundkonstruktion dazu die Basis gewährleistet. Eine Vorrichtung entsprechend dem Oberbegriff von Anspruch 1 ist aus der DE-A-2 937 761 bekannt.

Würste, insbesondere Bratwurstlängen, werden von Hand in Formen gelegt, um ein einfacheres Hantieren und schnelleres und einfacheres Braten zu ermöglichen. Die Wurstlängen werden von einer Füllmaschine in einer bestimmten Länge - je nach Füllgewicht - automatisch mit Wurstbrät abgefüllt und anschließend von Hand in Formen gelegt. Die bekannteste Form ist die Spiral- oder Schneckenform, in volksüblicher Weise als "Kringelburger" bekannt.

Da die Außenhaut - oder Naturdarm - sehr glatt und glitschig ist, ist das von Handformen sehr zeitaufwendig, und macht geübte und fingerfertige Hände erforderlich, um ein eventuell gutes Resultat zu erzielen. In der Regel wird das von Handformen - oder -legen - wie folgt vorgenommen: Ein Teilstück von dem Wurstanfang wird mit zwei bis drei Fingern festgehalten und mit der zweiten Hand wird die Wurstlänge spiralförmig um das Anfangsteil herumgedreht, sodaß eine Schneckenform entsteht. Da die Wurstform Spannung aufweist, muß diese mit einer Hand nach unten und zusammen gehalten werden, damit der Spieß möglichst vom Wurstende her durch die Mitte mit der zweiten Hand geschoben werden kann. Dieses ist keine leichte Aufgabe.

Die Aufgabe der Erfindung ist es, eine Wurstlege-Vorrichtung, insbesondere für Bratwürste zu schaffen, wodurch die Wurstlängen automatisch in verschiedene Formen gelegt werden können. Dies wird mit den Merkmalen des kennzeichnenden Teils von Anspruch 1 erreicht.

Zweckmäßigerweise ist das hier dargestellte System-Beispiel mit 4 Formen und Arbeitsstationen ausgestattet und beschrieben, wodurch ein rationeller Zeitablauf entwickelt wird. Die gleichen Vorgänge können aber auch an einer, 2 oder 3 oder mehr als 4 Arbeitsstationen und Legeformen durchgeführt werden.

Die 4 gleichgestalteten Legeformen sind mit Haltearmen an einer Drehvorrichtung verankert, die sich oberhalb einer Grundplatte um eine Achse dreht, und von einem unterhalb der Grundplatte gelagerten Drehantrieb durch die Platte hindurch angetrieben wird. Durch die Anordnung von 4 Arbeitsstationen bewegt der Drehantrieb diese Arbeits- und Legestationen in einem bestimmten Takt um 90 Grad. Während der Ruhezeit des Drehantriebes werden die Legeformen von oben- oder untenher bewegt, sodaß in der ersten Legeform die Wurst oder Brät eingelegt wird, in der zweiten der Spieß eingeschoben wird. An der dritten Arbeitsstation ist eine Form-Kippvorrichtung oder ein Greifersystem angebracht, sodaß die geformte Wurst zur Weiterverarbeitung aus der Form herausgenommen wird. An der vierten Arbeitsstation ist ein Positionier-Antrieb angeordnet, der die Form in die Anfangsposition steuert.

Die Zentralachse ist oberhalb der Grundplatte so verlängert, daß diese am Ende die Schalt- und Steuersysteme in einem Behältnis aufnehmen kann. Die Zentralachse ist zweckmäßigerweise als Rohr ausgelegt, wodurch Zu- und Ableitungen zu den Antriebs-Systemen verlegt werden können.

Da sich die Arbeits- und Formstationen oberhalb der Grundplatte frei im Takt um die Zentralachse drehen, müssen die Arbeitssysteme, die die Formen drehen oder bearbeiten, außerhalb der horizontalen Bewegungslinie gesteuert werden. Zu diesem Zweck ist ein Linear-Schlittensystem an der Zentralachse unterhalb des Steuerbehältnisses vertikal gelagert, der Auf- und Abbewegungen durchführt und an dem Antriebs- und Arbeitsaggregate positioniert sind. Außerdem sind Steuermechanismen dem Linearschlitten angeordnet, die beim nach Untenfahren des Schlittens Antriebs- und Bewegungs-Aggregate unterhalb der Grundplatte - während der Ruhepause des Hauptantriebes - in Betrieb setzen.

Die Wurstlängen werden durch ein Füllrohr, das an der Anfangsseite mit einem Trichter ausgestattet ist, und an der Endseite in einen gesteuerten Führungsschacht geführt. Das Füllrohr kann durch einen Antrieb eine Axialbewegung durchführen. Der Führungsschacht ist an einem Führungsarm befestigt und kann durch einen Kurvenantrieb in alle Bewegungsrichtungen in horizontaler Ebene gesteuert werden. Da die Legeform gleichzeitig zwei Radial-Bewegungen durchführen kann, wird durch die Kurvensteuerung des Führungsschachtes und durch die Radial-Bewegung der Legeform nahezu jede Art von Wurstformen erreicht. Die Zuführung der Wurstlängen zum Füllrohr wird zweckmäßigerweise durch ein gesteuertes Förderband durchgeführt.

Der Wurstlängenanfang wird - je nach Wurstform - der Startposition in der Legeform zugeführt, die eine Formmulde mit Spieß mit Formstegen oder in Form gesetzte Stifte aufweist, und durch den Linearschlitten sich einsenkenden Formdrehschacht von obenher aufgespießt und zwangsläufig gehalten. Nach dem Wurstlegevorgang wird die Aufwärtsbewegung des Linearschlittens und die Drehbewegung der Drehvorrichtung durch Sensoren angesteuert.

Die Legeform mit der geformten Wurst wird dadurch der nächsten Arbeitsstation zum Spießen zugeführt. Da der Spieß beim Einschießen starken Druck auf die Wurst ausübt, muß diese während des Vorgangs, von obenher in die vorgeprägte Legeform angedrückt werden. Dieses wird dadurch erreicht, daß durch den sich senkenden Linearschlitten eine drehbare Tellerscheibe sich auf die Wurst von obenher anlehnt und durch einen regulierbaren Druck die Wurst zur Form hin niederhält.

Die Spießvorrichtung ist so angeordnet, daß der Spieß ziemlich am Wurstende und durch die Mitte derselben eingedrückt wird. Da durch die unterschiedlichen Strukturen der Wurstfüllhaut sich unterschiedliche Längen ergeben, muß das Wurstende der Spießvorrichtung zugeführt werden. Dieses wird dadurch erreicht, daß durch den sich senkenden Linearschlitten ein Drehantrieb betätigt wird, der die Legeform mit der Wurst antreibt und das Wurstende der Spießvorrichtung durch eine Sensorsteuerung zuführt.

Da durch den Druck das Spießeinschießens das eingefüllte Brät verdrängt, kann am Wurstende dieses unkontrollierbar heraustreten, wodurch eine Verformung auftritt. Um dieses zu vermeiden, weist der Spießhalter eine Wurstendform auf, die sich vor dem Einschießen durch eine Steuerung an das Wurstende heranschiebt und das Wurstende abschließt. Nach dem Spießvorgang wird der Linearschlitten aufgefahren und die Legeform mit der gespießten Wurst durch die Drehvorrichtung der nächsten Arbeitsstation zugeführt.

An dieser Station wird die geformte und gespießte Wurst aus der Legeform, durch eine Vorrichtung, herausgenommen. Dieses wird dadurch erreicht, daß die Legeform bis zu 180° gekippt werden kann oder durch ein Greifer- oder Saug-System gesteuert wird.

Nach diesem Vorgang wird der Linearschlitten aufgefahren und die freigewordene Legeform wird durch die Drehvorrichtung zur vierten Arbeitsstation gedreht. Durch Herunterfahren des Linearschlittens wird die Form durch einen Drehantrieb, der sensorisch gesteuert wird, in die Startposition gedreht.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:
- Fig. 1: die Hauptachse und Drehantrieb mit Legeformen, das kardanisch gelagerte Füllrohr mit Füllschacht nach der Erfindung in einer schematischen Frontansicht,
- Fig. 2: die 4 Lege- und Arbeits-Stationen mit Drehantrieb und Transportband mit Füllrohr in einer schematischen Draufsicht,
- Fig. 3: die Hauptdrehachse mit Wurstlegeform, das sich drehende Füllrohr mit gesteuertem Füllschacht und der Wurstspießmulde,
- Fig. 4: die Wurstlegeform mit Formstegen und Formstifte mit Spießmulde,
- Fig. 5: die Spießvorrichtung mit Spießtransport, der Wurstendform und den Spießbehälter in einer schematischen Frontansicht,
- Fig. 5a: die Wurstlegeform mit Wurstschließform, den Spießtransport und das Spießbehältnis,
- Fig. 6: die Wende-Dreh-Vorrichtung der Legeform, wodurch die Wurst aus der Form herausgekippt wird,
- Fig. 7: das Greifer- oder Saug-System, wodurch die gespießte Wurst der Legeform entnommen und weitertransportiert wird, in einer Frontansicht,
- Fig. 7a: den Drehantrieb mit Greiferarm, die Legeformen und die Zentralachse mit Linearschlittenführung in einer Draufsicht,
- Fig. 8: den von unter der Grundplatte gesteuerten Form-Drehantrieb in einer Stirnansicht,
- Fig. 8a: den gelagerten Form-Drehantrieb in einer Draufsicht,
- Fig. 9: die Füllrohr-Station mit Füllschacht, wobei die Formstation in horizontalem Winkel schematisch dargestellt ist,
- Fig. 10: das kardanisch gelagerte Füllrohr mit Innenstruktur und den in einer Kugel eingebetteten Füllschacht,
- Fig. 10a: die schematische Darstellung des Füllrohres mit Kugelschacht.

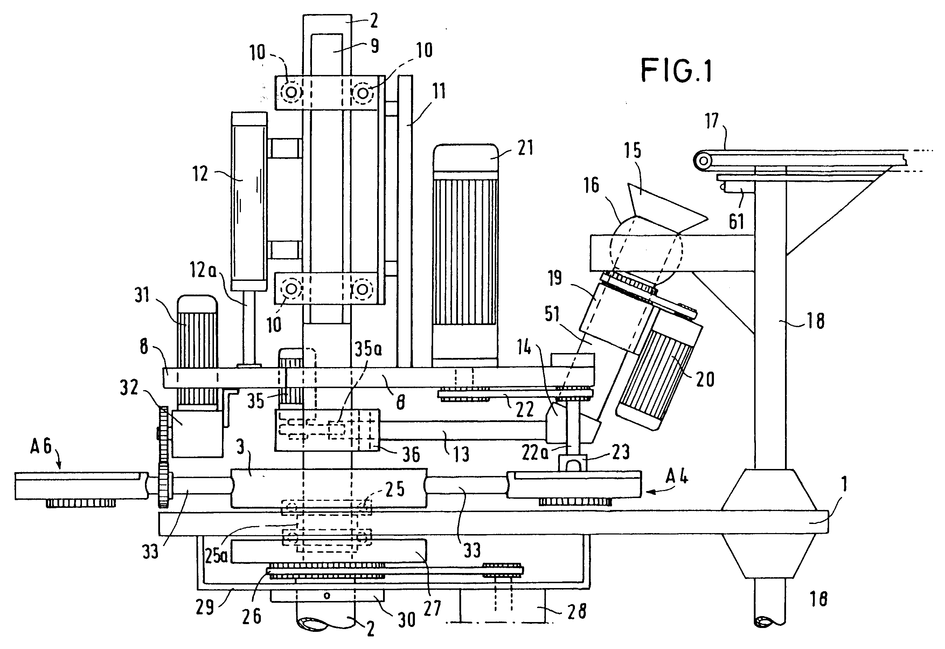

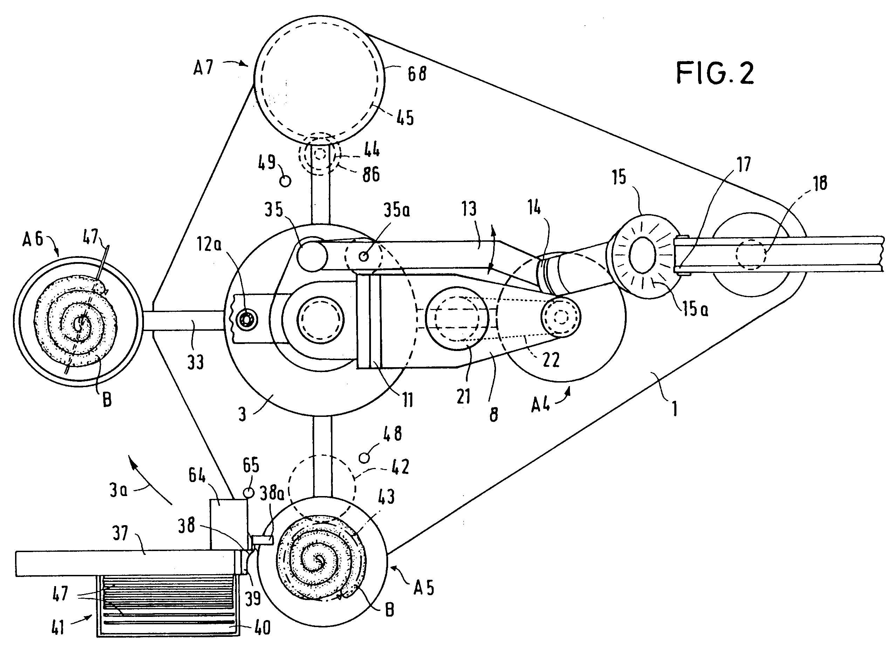

In den Zeichnungen der Fig. 1 und 2 ist mit 1 die Grundplatte bezeichnet, durch die die gelagerte Zentralachse 2 nach oben hindurchragt, um die sich der Trägerflansch 3 mit den Legeformen A4-A7 in Pfeilrichtung 3a dreht. Da der Drehantrieb mit Antreiber 28 und den Antriebselementen 26 in der Trägerplatte 29 unterhalb der Grundplatte 1 angeordnet und die Drehscheibe 27 mit der in Drucklagern 25 gebetteten Lagerbuchse 25a mit dem Trägerflansch 3 verbunden ist, können die Wurstlegeformen A4-A7, die durch Trägerrohre 32 mit dem Trägerflansch 3 verankert sind, frei über der Grundplatte 1 drehen. Die Trägerachse 2 endet nach untenhin in einem Fußständer, oder ähnlichem Stand, der nicht weiter beschrieben ist.

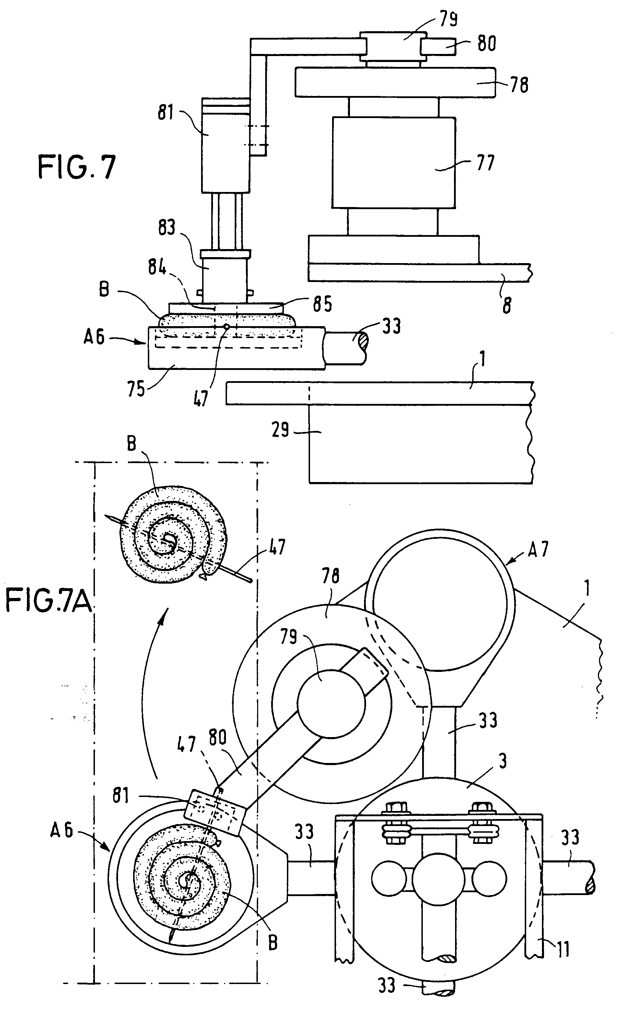

An dem Trägerrohr 2 ist mit einer Geräteplatte 8 ein Linearschlittensystem mit der Laufschiene 9, den Laufrollen 10 und der Trägerplatte 11 verankert, das in vertikaler Weise Hub-Bewegungen durchführt. Die Hub-Bewegungen werden durch den Kolbenzylinder 12 vorgenommen, der mit der Kolbenstange 12a an der Geräteplatte 8 verankert ist. An der Geräteplatte 8 sind Antriebe 21, 31 gelagert, weitere in Fig. 7 mit 91, die durch das gesteuerte Linearschlitten-System an verschiedenen Arbeitsstationen der Wurstlegeformen A4-A7 Funktions-Steuerungen ausführen. Außerdem sind in der Geräteplatte 8 nach untenhin Schaltfunktionen 48, 49, die durch die Grundplatte 1 hindurch Steuerantriebe 42, 42 betätigen, die zur Drehung der Legeformen in die Zahnradübersetzung eingreifen.

In Fig. 1 treibt der Antrieb 21 durch die Elemente 22 die Welle 22a an, an der sich der Formdrehschacht 23 befindet und zur Formdrehung in die Form A4 eingreift. Der Antrieb 31 ist mit einem Winkelgetriebe 32 ausgestattet, wodurch die Legeform A6 bis zu 180° gewendet wird. Zur Steuerung des Füllrohres 15, das in dem Füllschacht 14 mündet, wird der Trägerarm 13 durch den Kurvenantrieb 35 durchgeführt, der mit dem Trägerflansch 36 an der Trägerachse 2 gelagert ist. Zur Steuerung der Wurstlängen dient das Förderband 17, das mit dem Ständer 18 auf der Grundplatte 1 stationiert ist. Das Füllrohr 15 ist in dem Drehschacht 51 gelagert, der an einer Pendelkugel 16 durch den Drehantrieb 19, 20, den Wurstlängen eine Axialdrehung verleiht. Der Sensor 61, unter dem Förderband 17, steuert die Wurst nach deren Länge.

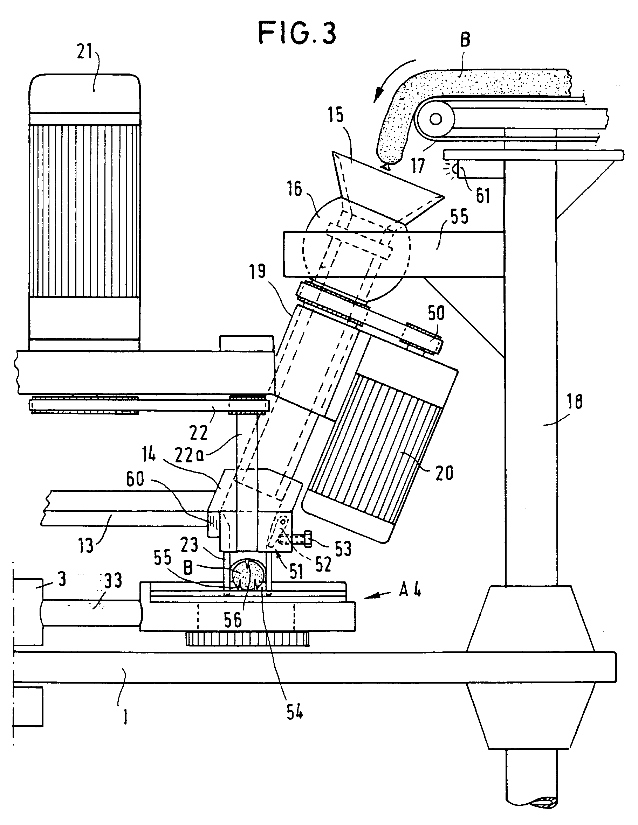

Fig. 3 zeigt eine Ausschnitt-Vergrößerung der Füllrohrlagerung 16, das Füllrohr 15 sowie den Drehantrieb 19, 20. Die Wurst B wird durch das gesteuerte Förderband 17 in den Trichter des Füllrohres hineintransportiert und wird, während des Gleitens in den Füllschacht 14, durch den Drehantrieb 19, 20 in axialer mindert wird und sich bei dem Wurstlegen in der Form positiv auswirkt. Die Wurst B wird so weit transportiert, bis sie mit einem Teil die Legeform A-4 erreicht hat.

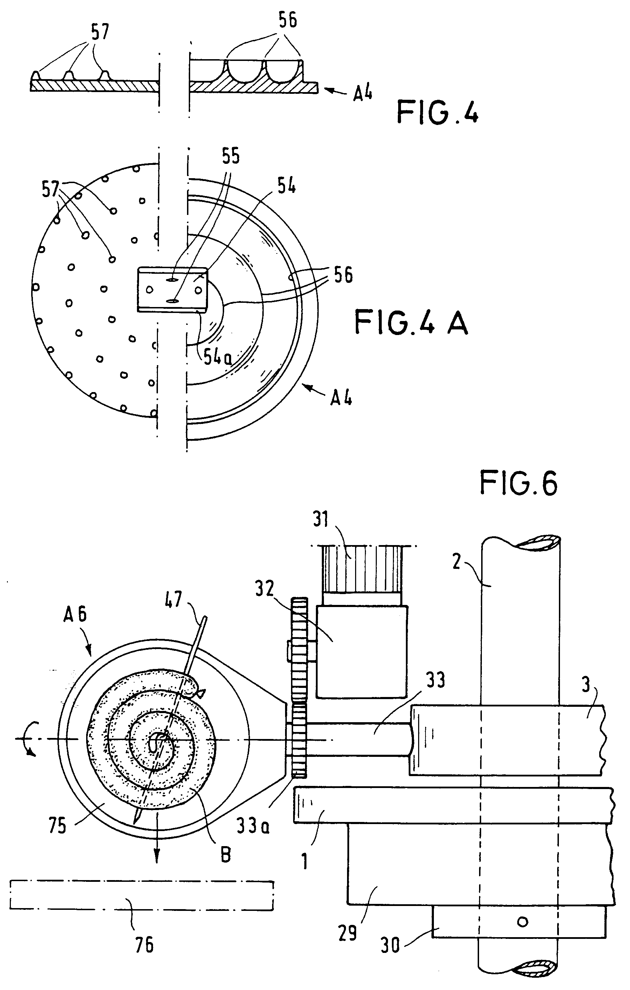

Dabei wird der Anfang von einem Spießschacht 54, Fig. 3 und 4, aufgenommen, der in der Mitte der Legeform angeordnet ist. Durch den Sensor 60, der an der Wurstführung 51 angeordnet ist, wird der Kurvenantrieb 35 in Tätigkeit gesetzt, der den Schachtführungsarm 13 horizontal über der Legeform nach außenhin steuert, so daß die Wurst B in die Spießnägel 55 hineingezogen wird, wobei gleichzeitig der Linearschlitten sich vertikal nach unten bewegt und der Formdrehschacht 23 über den Spießschacht 54 hinweg in die Legeform A-4 eingreift. Gleichzeitig werden Spießnägel 56 von obenher in die Wurst eingedrückt. Der Wurstanfang ist nun von untenher durch den Spießschacht 54 und von obenher durch den Formdrehschacht 23 umgeben und durch die Spießnägel 55 und 56 festgehalten.

Durch den Antrieb 21 und 22 wird nun der Formdrehschacht 23 angetrieben, wobei gleichzeitig der Kurvenantrieb 35 den Führungsarm 13 bewegt, sodaß eine Synchronsteuerung stattfindet und die Wurst sich in die Legeform A-4 einlegt. Die Legeform weist dazu Formstege 56 oder Formstifte 57 auf, so daß die Wurst in der Legeform A-4 eingebettet wird. Durch den Wurstspannungsgeber 52, der mittels Schraube 53 reguliert wird, kann der Wursttransport der Legeform entsprechend angepaßt werden. Durch programmierte Kurvensteuerungen 35, wodurch der Führungsarm 13 mit dem Füllschacht 14 gesteuert wird, sowie den programmgesteuerten Drehantrieb 21, 22 mit dem Formdrehschacht 123, können fast allerart von Wurstformen erreicht werden. Die Formstege 56, oder Formstifte 57, werden dementsprechend angeordnet.

Nachdem die Wurstlänge B komplett in der Legeform eingebettet ist, wird der Linearschlitten 8 mit den Antrieben durch den Sensor 60 vertikal nach oben bewegt, und der Hauptdrehantrieb 28 dreht die Legeform A-4 zur Station A5, an der ein Spieß in die Wurst eingeschoben wird, Fig. 2.

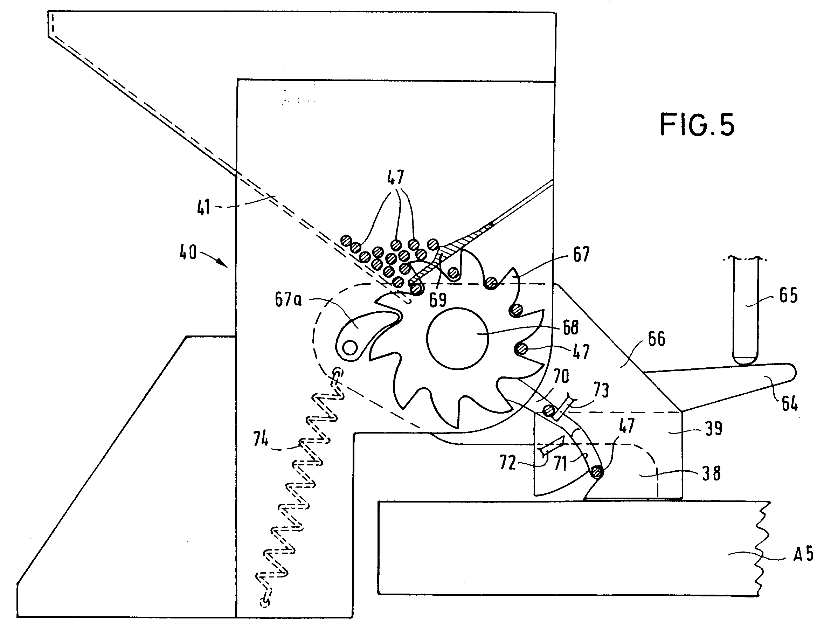

An dieser Station ist eine Spießvorrichtung 40 gelagert, an der ein Spießbehälter 41, ein Formschließschacht 39 mit einer Wurstform 38, einer Spießbewegung 37 und ein Sensor 38a angeordnet sind. Da der Spieß zentriert am Wurstende und Wurstanfang eingeschoben wird, wird die eingelegte Wurst B mit der Legeform A durch den Drehantrieb 42, 43 soweit gedreht, bis das Wurstende den Sensor 38a erreicht, wodurch der Antrieb 42, 43 abgeschaltet wird, und ein Spieß 47 durch einen Pneumatik- oder Hydraulik-Zylinder zentriert eingeschoben wird. Dabei wird die Wurstschließform 39 an das Wurstende vorabgefahren, so daß kein Brät austreten kann, Fig. 2. Gleichzeitig wird durch das sich Senken des Linearschlittens 8 eine Druckscheibe 59 durch den Federbolzen 63 von obenher auf die Wurst gedrückt, so daß die Wurst B während des Spießvorganges in die Legeform fest eingebettet liegt, Fig. 5a.

Fig. 5 zeigt eine schematische Darstellung von der Spießvorrichtung 40, wobei die Spieße 47 aus dem Behälter 41 durch ein Zantransportrad 67 mit der Achse 68 aufgenommen und dem Spießkanal 71 zugeführt werden. An dem Linearschlitten 8 ist ein Schaltstift 65, Fig. 2 und 5, angeordnet, der den Spießarm 66 durch den Schalthebel 64 zur Wurst hin positioniert und dabei das Transportzahnrad bewegt und an der Spießaufnahme 69 einen Spieß 47 aufnimmt und gleichzeitig einen anderen Spieß 47 der Kammer 70 zuführt. Durch die Auf- und Abbewegung der Spießeinheit 66 wird das Zahntransportrad 67 bewegt, wodurch auch die Spieße 47 im Behälter 41 bewegt werden, und gleichzeitig wird die Spießkammer 70 durch die Klinkenstege 72, 73 geöffnet oder geschlossen, so daß nur ein Spieß der Spießkammer 71 zugeführt wird. Nach dem Spießvorgang wird die Spießeinheit, durch die Klinken- 70 und Federwirkung 74, mit dem Linearschlitten nach oben gesteuert, so daß der Hauptdrehantrieb die Form A5 zur Station A6 frei drehen kann.

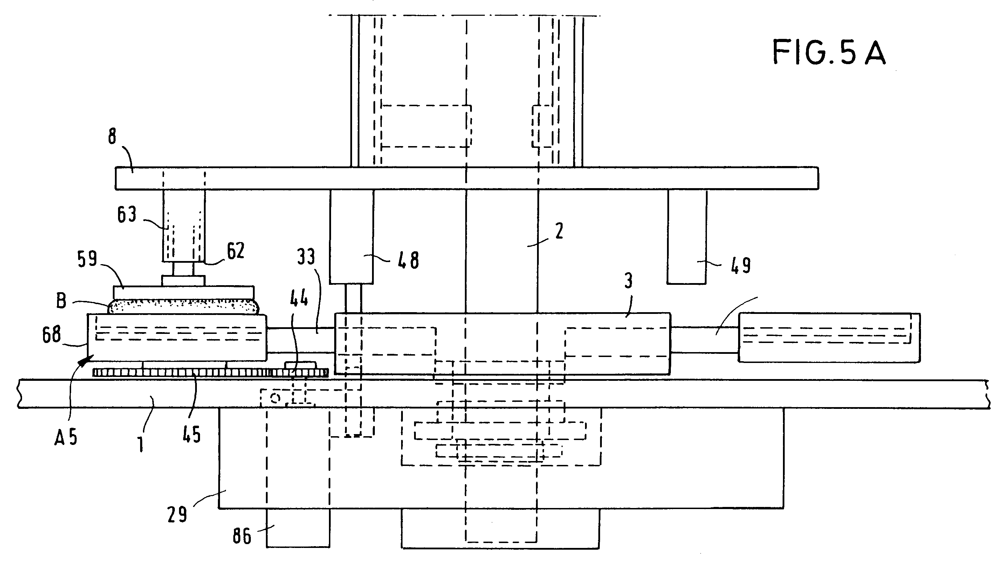

Die Fig. 6, 7 und 7a zeigen das Herausnehmen der Wurst B aus der Form A-6. Wie in Fig. 1 beschrieben, wird die Legeform durch einen Drehantrieb 31, 32 mindestens um 130° gekippt, wodurch die Wurst B aus der Legeform herausfällt. Durch das Herunterfahren des Linearschlittens greift der Antrieb 31, 32 in die Drehachse 33a ein und dreht den Formkörper 75, so daß die Wurst B mit Spieß 47 auf das Förderband 76 herausfällt, Fig. 6.

Die Fig. 7 und 7a zeigen eine andere Art, die geformte und gespießte Wurst B aus der Legeform herauszunehmen. Auf den Linearschlitten 8 ist ein Drehantrieb 77 angeordnet, auf dem eine Drehscheibe 78 mit Drehflansch 79 einen Auslegearm 80 aufgesetzt ist, der einen Hubzylinder 81 aufnimmt, an dem ein Greifer 83 mit einer Greiferzange 84 den Spieß 47 durch einen Schließmechanismus aufgreift. Durch das Herunterfahren des Linearschlittens 8, sowie durch das Ausfahren des Hubzylinders 81, wird eine Greiferplatte 83 auf die Wurst B leicht angepresst, wodurch ein Vordrehen oder -kippen verhindert wird, nehmen die Greiferzangen 84 den Spieß auf, die Wurst B wird durch den Hubzylinder 81 aus der Legeform herausgenommen, und der Drehantrieb 77 dreht den Auslegearm 80 mit dem Hubzylinder 81 auf eine bestimmte Position, der Hubzylinder fährt den Greifer nach unten, der die Wurst B durch Öffnen der Greiferzangen 84 auf ein Förderband 76 ablegt, Fig. 7a. Der Greifer 83 kann auch durch eine Saugvorrichtung ersetzt werden. Durch die exakte Positionierung des Spießes 47 kann der Spieß durch andere Mechanismen zum Beispiel weitergedreht oder -transportiert oder auf Länge abgeschnitten werden. Durch das Auffahren des Linearschlittens wird die Greifereinheit außerhalb der horizontalen Drehebene der Legeform gesteuert.

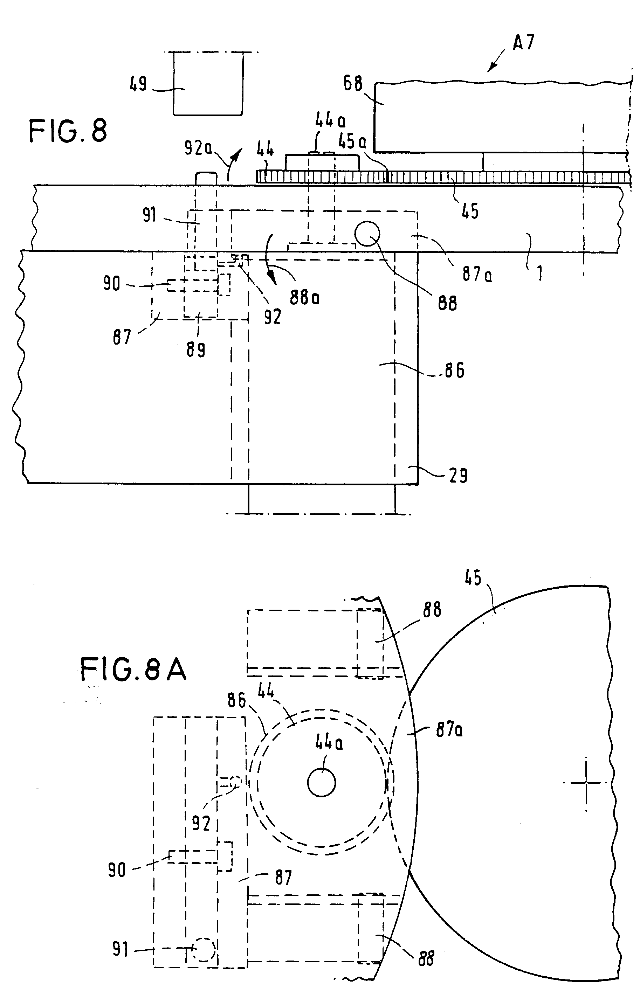

Bevor eine freie Legeform A zur Wurst-Aufnahmestation A4 transportiert wird, muß diese in die Anfangsposition gedreht werden. In den Fig. 8 und 8a wird ein möglicher Drehantrieb 86 dargestellt, der mit dem Lagerrahmen 87 in der Trägerplatte 29 verankert ist. Der Drehantrieb 86, beispielsweise ein gesteuerter Elektromotor, ist mit dem Trägerflansch 87a durch die Lagerbolzen 88 in dem Lagerrahmen 87 außerhalb der Antriebsachse 44a gelagert, sodaß sich der Motor, in Pfeilrichtung 88a, mit dem Antriebsrad 44 aus dem Eingriff 45a des Form-Drehrades 45 wegbewegt und somit aus der Drehebene der Legeformen gesteuert wird. Das Sichwegdrehen des Antriebs kann auch durch eine Feder bewirkt werden.

An der Innenseite des Lagerrahmens 87 ist ein Kipphebel 89 durch einen Lagerbolzen 90 angeordnet, der nach obenhin mit dem Schaltbolzen 91 durch die Grundplatte 1 hindurchragt. An dem Linearschlitten 8 ist Schaltsegment 49 so gelagert, daß dieser durch das Herunterfahren des Linearschlittens 8 den Schaltbolzen 91 zur Grundplatte 1 hin bewegt und durch den Kipphebel 89 mit dem Schaltnocken 92 den Trägerflansch 87a in Pfeilrichtung 92a bewegt, sodaß das Antriebsrad 44 dem Zahneingriff 45a dem Formdrehrad 45 zugeführt wird. Durch die Steuerung des Motors 86 wird die Legeform A7 in die Startposition gesteuert, sodaß durch das Nachobengehen des Linearschlittens 8 das Antriebsrad A4 in Außerbetriebsposition gebracht wird.

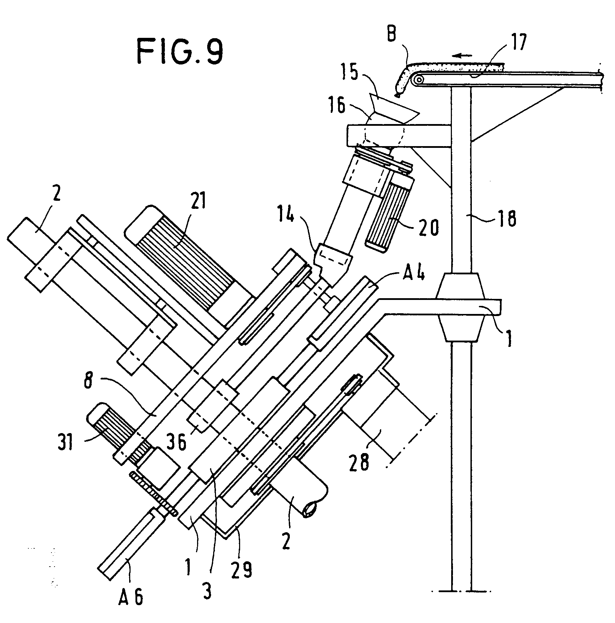

Fig. 9 zeigt den Füllrohrstand 18 mit Förderband 17 und dem Füllrohr 15 in vertikaler Ebene, wozu die Hauptachse 2 mit Linearschlitten 8, der Grundplatte 1 und der Drehebene der Legeformen horizontal oder in horizontalem Winkel angeordnet sein kann, sodaß die Wurstlänge B der Legeform A in einem bestimmten Winkel zugeführt wird.

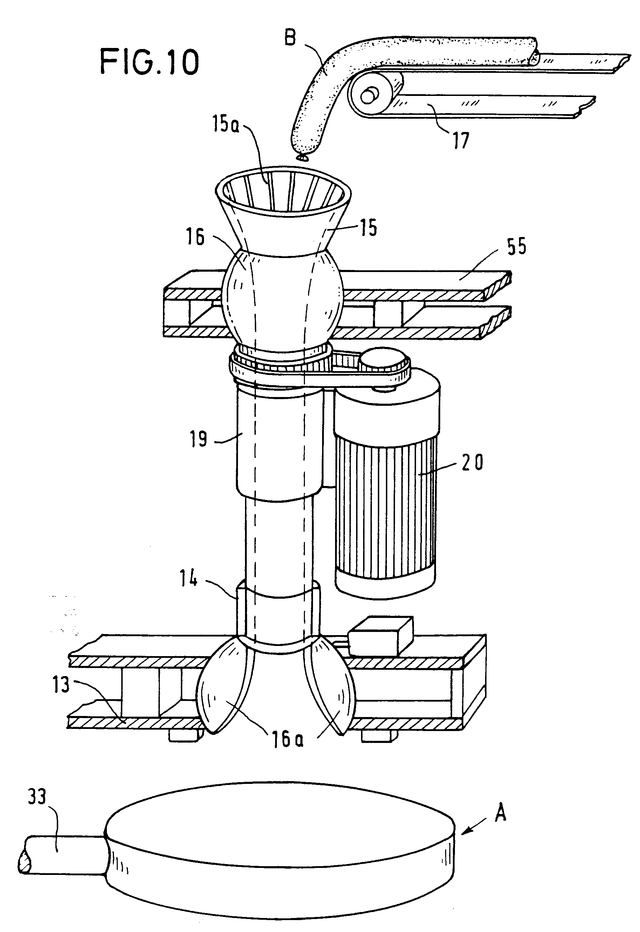

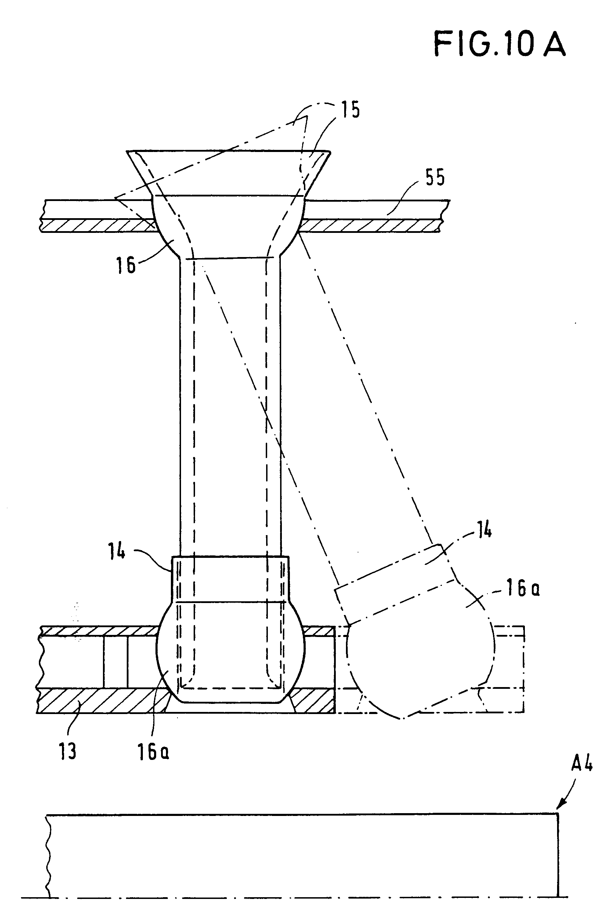

Die Fig. 10 zeigt das kardanisch gelagerte Füllrohr 15, das mit dem Kugelkörper 16, 19 in dem Haltearm 55 gelagert ist und durch den Drehantrieb 20 angetrieben wird. Das Füllrohr 15 weist eine Innenstruktur 15a auf, die in einer Längsform, in einer Spiralform oder in anderer Weise gestaltet sein kann.

Die Wurstlängen B, die von dem Förderband 17 durch das Füllrohr 15 geführt werden, erhalten durch das Sichdrehen des Füllrohres 15 mit der Innenstruktur 15a eine Drehung, wodurch die Spannung der Wurstoberfläche herausgedreht wird und das Wurstformen wesentlich erleichtert wird.

In der schematischen Darstellung in der Fig. 10a, ist der Führungsschacht 14 mit einer Kugellagerung 16 ausgestattet, sodaß das Füllrohr 15 durch den Führungsarm 13 in jeder Richtungsart horizontal über der Legeform A4 gesteuert werden kann, wodurch jeder Art Wurstformen erreicht werden.

## Patentansprüche

1. Vorrichtung zum automatischen Legen, Formen und Spießen von Wurstlängen, insbesondere Bratwurst, mit Zentral-Antriebs-Steuerung, an der eine oder mehrere Legeform- und Arbeitsstationen angeordnet sind, **dadurch gekennzeichnet**, daß in diesen die Wurstlängen durch ein zweifach kardanisch gelagertes, drehbares Trichter-Füllrohr in die vorgesehenen Formen gelegt und gedreht werden können, wobei das Füllrohr (15) einen nach einem vorgegebenen Programm steuerbaren Führungsarm (13) aufweist.

2. Vorrichtung nach Anspruch 1, **dadurch gekennzeichnet**, daß das kardanisch gelagerte Füllrohr (15) einen gesteuerten Drehantrieb (20) aufweist.

3. Vorrichtung nach Anspruch 1, **dadurch gekennzeichnet**, daß jede freigelagerte Arbeitsstation (A) von oben- und untenher motorisch bewegt und angetrieben werden kann.

4. Vorrichtung nach Anspruch 1, **dadurch gekennzeichnet**, daß eine gesteurte Liniarschlitten-Vorrichtung (8) an der Trägerachse (2) vertikal gelagert ist, eine gesteuerte Auf- und Abwärtsbewegung durchführt, wodurch verschiedene Antriebe die Wurstformen (A) drehen oder bewegen, sowie Schaltfunktionen durchgeführt werden.

5. Vorrichtung nach Anspruch 1, **dadurch gekennzeichnet**, daß der Wurstanfang in einer Formmulde (89) von unten und von einem Formdrehschacht (23) von oben aufgespießt wird.

6. Vorrichtung nach einem der Ansprüche 1-5, **dadurch gekennzeichnet**, daß durch Lichtschranken und Sensoren der Wurst-Anfang und Ende kontrolliert und gesteuert wird.

7. Vorrichtung nach einem der Ansprüche 1-6, **dadurch gekennzeichnet**, daß ein Spieß (47) automatisch durch das Wurstende und den Wurstanfang steuerbar geführt wird.

8. Vorrichtung nach einem der Ansprüche 1-7, **dadurch gekennzeichnet**, daß ein Schließsegment (38) mit Formschacht (85) während des Spießens an das Wurstende geführt wird.

9. Vorrichtung nach einem der Ansprüche 1-8, **dadurch gekennzeichnet**, daß das Wurstende zum Spießen durch einen Drehantrieb positioniert wird.

10. Vorrichtung nach einem der Ansprüche 1-9, **dadurch gekennzeichnet**, daß durch Zahnsegmente (40) (73) die Spieße (47) einzeln aus dem Behältnis (41) automatisch durch die Spießführungen (76) (77) dem Spießkolben (78a) zugeführt werden.

11. Vorrichtung nach einem der Ansprüche 1-10, **dadurch gekennzeichnet**, daß die geformte Wurst (B) durch einen Drehantrieb (31) aus der gewendeten Form (A) herausgekippt wird.

12. Vorrichtung nach einem der Ansprüche 1-11, **dadurch gekennzeichnet**, daß die geformte und aufgespießte Wurst (B) durch einen gesteuerten Greifer (97) und Greiferarme (99) am Spieß (47) aus der Form (A) automatisch entnommen und weitergeschwenkt wird.

13. Vorrichtung nach einem der Ansprüche 1-12, **dadurch gekennzeichnet**, daß die Wurstform (A) durch einen gesteuerten Drehantrieb (100) automatisch in die Startposition gedreht wird.

14. Vorrichtung nach einem der Ansprüche 1-13, **dadurch gekennzeichnet**, daß ein im Arbeitstakt gesteuertes Förderband (17) die Wurstlängen automatisch der Form (A) durch das Füllrohr (15) zuführt.

15. Vorrichtung nach einem der Ansprüche 1-14, **dadurch gekennzeichnet**, daß das Füllrohr (15) an den Innenflächen eine Struktur (15a) aufweist.

16. Vorrichtung nach einem der Ansprüche 1-15, **dadurch gekennzeichnet**, daß die Zentralachse (2) als Hohlkörper ausgestattet ist, wodurch die Steueranschlüsse vom Schaltkasten (109) hindurchgeführt werden.

17. Vorrichtung nach einem der Ansprüche 1-16, **dadurch gekennzeichnet**, daß die Trägerachse (2) mit Antriebs-Elementen zum Füllrohr (15) horizontal oder in einem bestimmen Winkel angeordnet werden kann.

18. Vorrichtung nach einem der Ansprüche 1-17, **dadurch gekennzeichnet**, daß die Bearbeitung und die Antriebe extern, außerhalb der Zentralachse (2) angeordnet werden können.

## Claims

1. Appartus for automatically laying, shaping and skewering lengths of sausage, in particular frying sausage, with a central drive control at which one or more laying-shaping and work station(s) is/are arranged, characterised in that the lengths of sausage can be laid in the designated moulds and rotated in these stations by a rotatable funnel filling tube which is doubly cardanically mounted, the filling tube (15) comprising a guide arm (13) which can be controlled according to a predetermined programme.

2. Apparatus according to claim 1, characterised in that the doubly cardanically mounted filling tube (15) comprises a controlled rotary drive (20).

3. Apparatus according to claim 1, characterized in that each free-mounted work station (A) can be moved and driven by a motor from above and below.

4. Apparatus according to claim 1, characterized in that a controlled linear slide apparatus (8) is vertically mounted on the carrier spindle (2) and executes a controlled upward and downward movement, whereby various drives move or turn the sausage moulds (A) and switching functions are performed.

5. Apparatus according to claim 1, characterized in that the beginning of the sausage is skewered in a mould cavity (89) from below and from a mould rotating shaft (23) from above.

6. Apparatus according to one of claims 1 - 5, characterised in that the beginning and the end of the sausage are monitored and controlled by light barriers and sensors.

7. Apparatus according to one of claims 1 - 6, characterised in that a skewer (47) is automatically guided in a controllable manner through the beginning and the end of the sausage.

8. Apparatus according to one of claims 1 - 7, characterised in that a closing segment (38) with a mould shaft (85) is guided up to the end of the sausage during the skewering process.

9. Apparatus according to one of claims 1 - 8, characterised in that the end of the sausage is positioned by a rotary drive for skewering.

10. Apparatus according to one of claims 1 - 9, characterised in that the skewers (47) are automatically fed one by one from the container (41) to the skewer plunger (78a) through the skewer guides (76) (77) by toothed segments (40) (73).

11. Apparatus according to one of claims 1 - 10, characterised in that the shaped sausage (B) is tipped out of the turned mould (A) by a rotary drive (31).

12. Apparatus according to one of claims 1 - 11, characterised in that the shaped and skewered sausage (B) is automatically removed from the mould (A) and swung further by a controlled gripper (97) and gripper arms (99) at the skewer (47).

13. Apparatus according to one of claims 1 - 12, characterised in that the sausage mould (A) is automatically turned into the starting position by a controlled rotary drive (100).

14. Apparatus according to one of claims 1 - 13, characterised in that a conveyor belt (17), which is controlled in a working cycle, automatically feeds the lengths of sausage through the filling tube (15) to the mould (A).

15. Apparatus according to one of claims 1 - 14, characterised in that the inner surfaces of the filling tube (15) are structured (15a).

16. Apparatus according to one of claims 1 - 15, characterised in that the central spindle (2) is formed as a hollow body, through which the control connections from the switch box (109) are passed.

17. Apparatus according to one of claims 1 - 16, characterised in that the carrier spindle (2) can be arranged horizontally or at a certain angle with respect to the filling tube (15) by means of drive elements.

18. Apparatus according to one of claims 1 - 17, characterised in that the processing system and the drives may be arranged externally, outside of the central spindle (2).

## Revendications

1. Dispositif pour déposer, mettre en forme et embrocher automatiquement des longueurs de saucisse, en particulier de saucisses rôties, comprenant un dispositif central d'entraînement, sur lequel sont disposées une ou plusieurs stations de travail ou stations de dépôt et de mise en forme, caractérisé en ce que, dans lesdites stations, les longueurs de saucisse peuvent être déposées et enroulées dans les formes prévues, au moyen d'un tube de remplissage à entonnoir qui peut tourner et qui est monté au moyen d'un double cardan, le tube de remplissage (15) comportant un bras de guidage (13) commandé par un programme prédéterminé.

2. Dispositif selon la revendication 1, caractérisé en ce que le tube de remplissage monté sur cardans (15) comporte un dispositif commandé d'entraînement en rotation (20).

3. Dispositif selon la revendication 1, caractérisé en ce que chaque station de travail montée libre (A) peut être déplacée et entraînée par un moteur par le haut et par le bas.

4. Dispositif selon la revendication 1, caractérisé en ce qu'un dispositif commandé à chariot linéaire (8) est monté verticalement sur l'axe porteur (2) et effectue un déplacement ascendant et descendant commandé, de sorte que différents dispositifs d'entraînement font tourner ou déplacent les plateaux de mise en forme des saucisses (A) et que des fonctions de commutation sont effectuées.

5. Dispositif selon la revendication 1, caractérisé en ce que le début de la saucisse est embroché, par le bas, dans une cuvette de mise en forme (89) et, par le haut, par une cavité de mise en forme par rotation (23).

6. Dispositif selon l'une des revendications 1 à 5, caractérisé en ce que le début et la fin de la saucisse sont contrôlés et commandés au moyen de cellules photo-électriques et de capteurs.

7. Dispositif selon l'une des revendications 1 à 6, caractérisé en ce qu'une brochette (47) est enfoncée automatiquement de manière commandée à travers la fin de la saucisse et le début de la saucisse.

8. Dispositif selon l'une des revendications 1 à 7, caractérisé en ce qu'un élément de fermeture (38) muni d'une cavité de mise en forme (85) est placé sur la fin de la saucisse lors de l'embrochement.

9. Dispositif selon l'une des revendications 1 à 8, caractérisé en ce que, pour l'embrochement, la fin de la saucisse est amenée en position par un dispositif d'entraînement en rotation.

10. Dispositif selon l'une des revendications 1 à 9, caractérisé en ce que les brochettes (47) prélevées individuellement dans la trémie (41) par des segments dentés (40) sont acheminées automatiquement jusqu'au piston à brochettes (78a) par les moyens de guidage de brochette (76) (77).

11. Dispositif selon l'une des revendications 1 à 10, caractérisé en ce que la saucisse (B) mise en forme est évacuée du plateau de mise en forme renversé (A) par un dispositif d'entraînement en rotation (31).

12. Dispositif selon l'une des revendications 1 à 11, caractérisé en ce que la saucisse (B) mise en forme et embrochée est prélevée automatiquement sur le plateau de mise en forme (A) par un dispositif de saisie commandé (97) et des bras de saisie (99) de la brochette (47), et retournée.

13. Dispositif selon l'une des revendications 1 à 12, caractérisé en ce que le plateau de mise en forme de saucisse (A) est amené automatiquement en position de départ par un dispositif commandé d'entraînement en rotation (100).

14. Dispositif selon l'une des revendications 1 à 13, caractérisé en ce qu'une bande transporteuse (17) commandée de façon cadencée amène automatiquement les longueurs de saucisse au plateau de mise en forme (A) à travers le tube de remplissage (15).

15. Dispositif selon l'une des revendications 1 à 14, caractérisé en ce que le tube de remplissage (15) comporte une structure (15a) sur ses surfaces intérieures.

16. Dispositif selon l'une des revendications 1 à 15, caractérisé en ce que l'axe central (2) est conçu sous la forme d'un corps creux que traversent les liaisons de commande des boîtiers de commande (109).

17. Dispositif selon l'une des revendications 1 à 16, caractérisé en ce qu'au moyen d'éléments d'entraînement, l'axe porteur (2) peut être disposé horizontalement ou selon un angle déterminé par rapport au tube de remplissage (15).

18. Dispositif selon l'une des revendications 1 à 17, caractérisé en ce que les organes de traitement et d'entraînement peuvent être disposés à l'extérieur, en dehors de l'axe central (2).
